# FASCICULE DE BREVET EUROPEEN

(11) **EP 1 591 709 B1**
(45) Date de publication et mention de la délivrance du brevet: **20.06.2007**
(21) Numéro de dépôt: 05290771.4
(22) Date de dépôt: 07.04.2005
(51) Int. Cl.: F16L 37/091

(54) **Elément de circuit de transport de fluide équipé d'un dispositif de raccordement de type cartouche**
Flüssigkeitskreislaufselement ausgerüstet mit einer patronenartigen Anschlußvorrichtung
Fluid circuit element equipped with a cartouche type connection device

(30) Priorité: 27.04.2004 FR 0404436
(43) Date de publication de la demande: 02.11.2005
(73) Titulaire: LEGRIS SA, 35000 Rennes (FR)
(72) Inventeur: Le Quere, Philippe, 35830 Betton (FR)
(74) Mandataire: Lavialle, Bruno François Stéphane

(56) Documents cités:
- US-A- 3 447 819
- US-A- 3 731 955

## Description

La présente invention concerne un élément de circuit de transport de fluide, comme un élément émetteur ou récepteur de fluide tels qu'une pompe ou un réservoir, équipé d'un dispositif de raccordement à une extrémité de conduite.

### ARRIERE PLAN DE L'INVENTION

On connaît des dispositifs de raccordement comportant un insert tubulaire pour être engagé dans un alésage et y être retenu par une rondelle d'ancrage, l'insert tubulaire étant pourvu intérieurement d'un élément d'étanchéité et d'un organe d'accrochage pour assujettir de façon étanche une extrémité de conduite dans l'insert. L'insert reçoit un poussoir tubulaire de déconnexion à coulissement axial entre une première position ou position de repos dans laquelle le poussoir est inactif et une deuxième position dans laquelle le poussoir est actif et coopère avec l'organe d'accrochage pour libérer l'extrémité de conduite.

La rondelle d'ancrage possède une circonférence intérieure engagée sur l'insert et une circonférence extérieure divisée en dents qui sont inclinées par rapport à la direction d'engagement de l'insert dans l'alésage et qui sont agencées pour mordre la surface de l'alésage, de telle manière qu'un effort d'extraction de l'insert hors de l'alésage provoque un arc-boutement des dents's'opposant au retrait de l'insert. Le montage du dispositif de raccordement sur l'élément de circuit se limite ainsi principalement à l'enfoncement de l'insert dans l'alésage. Ce montage est simple et rapide.

Ainsi montés, les dispositifs de raccordement sont indémontables. En cas d'erreur d'assemblage du dispositif de raccordement, l'élément de circuit doit donc être mis au rebut du fait de cette non démontabilité qui interdit toute correction de l'erreur.

On connaît par ailleurs des dispositifs de raccordement démontables dans lesquels l'insert est agencé pour être vissé dans l'alésage. Le vissage d'un tel dispositif de raccordement est plus long que l'emmanchement d'un dispositif de raccordement du type précédent et nécessite la réalisation d'un taraudage dans le corps.

Il est connu du document US-A-3 731 955 un élément de circuit de transport de fluide, comportant un corps ayant un alésage dont une extrémité est équipée d'un dispositif de raccordement à une extrémité de conduite, le dispositif de raccordement comportant une partie équipée d'une rondelle d'ancrage du dispositif dans l'alésage, la rondelle étant déformable entre un état d'ancrage et un état de libre passage. La rondelle est fixée dans l'extrémité de l'alésage rendant difficiles sa mise en place et la vérification de sa présence avant mise en place du dispositif de raccordement.

### OBJET DE L'INVENTION

Il serait donc intéressant de disposer d'un dispositif de raccordement qui puisse être emmanché dans l'alésage de l'élément de circuit tout en restant démontable en cas de besoin.

### BREVE DESCRIPTION DE L'INVENTION

A cet effet, on prévoit, selon l'invention, un élément de circuit de transport de fluide, comportant un corps ayant un alésage dont une extrémité est équipée d'un dispositif de raccordement à une extrémité de conduite, le dispositif de raccordement comportant une partie équipée d'une rondelle d'ancrage du dispositif dans l'alésage, la rondelle étant déformable entre un état d'ancrage et un état de libre passage et cette partie étant agencée pour être manoeuvrable de l'extérieur du corps dans un sens d'enfoncement dans l'alésage depuis une position d'ancrage dans laquelle la rondelle est dans son état d'ancrage et une position de libération dans laquelle la rondelle coopère avec une butée, fixe par rapport à l'alésage dans le sens d'enfoncement, amenant la rondelle dans son état de libre passage dans lequel elle est maintenue par des moyens de maintien.

Ainsi, lorsque la partie support de la rondelle d'ancrage est amenée dans sa position de libération, la rondelle d'ancrage passe dans son état de libre passage autorisant le retrait du dispositif de raccordement hors de l'alésage.

Selon un premier mode de réalisation avantageux, la rondelle d'ancrage est plastiquement déformable entre ses deux états.

Le maintien de la rondelle dans sa position de libre passage résulte du caractère plastique de la déformation. Le maintien de la rondelle est alors réalisé de manière particulièrement simple.

Selon un deuxième mode de réalisation avantageux, la rondelle d'ancrage est élastiquement déformable entre ses deux états, les moyens de maintien comprenant une bague montée sur l'insert en aval de la rondelle d'ancrage par référence au sens d'enfoncement pour coulisser sur l'insert et pour prendre appui contre un épaulement de l'alésage de telle manière que la bague vienne coiffer la rondelle d'ancrage lorsque la partie de l'insert qui porte la rondelle est dans la position de libération.

Il est alors possible de faire coulisser la bague sur l'insert en direction de sa position initiale pour permettre à la rondelle d'ancrage de revenir dans son état d'ancrage. Le dispositif de raccordement est alors à nouveau utilisable.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux dessins annexés, parmi lesquels:
- la figure 1 est une vue en coupe longitudinale d'un élément de circuit conforme à un premier mode de réalisation de l'invention,
- la figue 2 est une vue analogue à celle de la figure 1, au cours d'une phase préparatoire au retrait du dispositif de raccordement de l'élément de circuit,
- la figure 3 est une vue analogue à celle de la figure 1 lors du retrait du dispositif de raccordement,
- les figures 4 à 6 illustrent en coupe longitudinale des dispositifs de raccordement selon trois variantes du premier mode de réalisation,
- la figure 7 est une vue en coupe longitudinale d'un élément de circuit conforme à un deuxième mode de réalisation de l'invention,
- la figure 8 est une vue analogue à celle de la figure 7, lors d'une phase préparatoire au retrait du dispositif de raccordement,
- la figure 9 est une vue analogue à celle de la figure 7 lors du retrait du dispositif de raccordement.

### DESCRIPTION DETAILLEE DE L'INVENTION

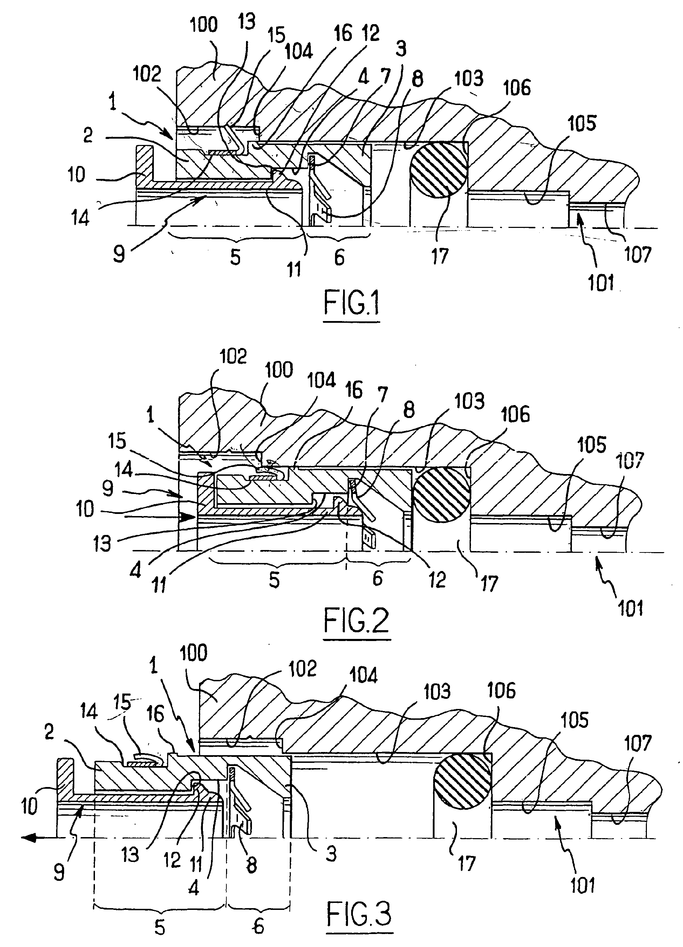

En référence aux figures 1 à 3, l'élément de circuit de transport de fluide conforme à l'invention a un corps 100 dans lequel est ménagé un alésage généralement désigné en 101 qui possède un tronçon d'entrée 102 débouchant d'un côté à l'extérieur du corps 100 et à l'opposé dans un tronçon 103 de diamètre inférieur à celui du tronçon d'entrée 102 et séparé de ce dernier par un épaulement 104. Le tronçon 103 débouche dans un tronçon 105 de diamètre inférieur à celui du tronçon 103 et égal au diamètre externe de l'extrémité de conduite. Le tronçon 105 est séparé du tronçon 103 par un épaulement 106 et débouche à l'opposé dans un tronçon 107 de diamètre égal au diamètre interne de l'extrémité de conduite.

L'élément de circuit comprend un dispositif de raccordement permettant de connecter une extrémité de conduite à l'alésage 101.

Le dispositif de raccordement comprend un insert tubulaire généralement désigné en 1, possédant des extrémités 2 et 3 entre lesquelles s'étend un alésage 4. L'alésage 4 comprend de façon connue en elle-même un tronçon d'entrée 5 du côté de l'extrémité 2 et un tronçon de sortie 6 du côté de l'extrémité 3. Le tronçon d'entrée 5 est de forme cylindrique et le tronçon de sortie 6 est de forme tronconique s'évasant vers le tronçon d'entrée 5. Le tronçon de sortie a une grande section de plus grand diamètre que le tronçon d'entrée, raccordée à celui-ci par un épaulement 7.

Dans le tronçon de sortie 6, est montée une rondelle d'accrochage 8.

La rondelle d'accrochage 8, connue en elle-même, est de forme tronconique et a une circonférence extérieure reçue dans la grande section du tronçon de sortie 6 au voisinage de l'épaulement 7. La rondelle d'accrochage 8 a une circonférence intérieure divisée de manière connue en dents destinées à mordre la surface extérieure de l'extrémité de conduite. La rondelle d'accrochage 8 est déformable entre un état de repos ou état d'accrochage dans lequel elle délimite un diamètre intérieur inférieur au diamètre extérieur de l'extrémité de conduite et un état de libération dans lequel elle délimite un diamètre intérieur supérieur au diamètre extérieur de l'extrémité de conduite.

Un poussoir tubulaire généralement désigné en 9 est reçu dans le tronçon d'entrée 5. Le poussoir 9 sert à la déconnexion de l'extrémité de conduite.

Le poussoir 9 comprend une extrémité 10 destinée à s'étendre en saillie de l'alésage 101 et une extrémité 11 opposée reçue dans l'insert 1.

L'extrémité 11 du poussoir 9 est pourvue extérieurement d'un redan 12 coopérant avec un redan 13 de l'insert 1 retenant le poussoir 9 dans l'insert 1. Le redan 12 a du côté du tronçon de sortie 6 une face inclinée permettant l'insertion du poussoir dans l'insert.

Le poussoir 9 est mobile à coulissement dans l'insert 1 entre une première position d'enfoncement ou position de repos dans laquelle le nez du poussoir 9 est éloigné de la rondelle d'accrochage 8 dans son état d'accrochage et une deuxième position d'enfoncement dans laquelle le nez du poussoir 9 est fortement en appui contre la rondelle d'accrochage 8 et déforme celle-ci dans son état de libération.

L'insert 1 est pourvu extérieurement d'une gorge 14 dans laquelle est reçue la circonférence interne d'une rondelle d'ancrage 15 dont la circonférence externe est divisée en dents destinées à mordre la surface de l'alésage 101.

La rondelle d'ancrage 15 est de forme classique tronconique et est déformable plastiquement entre un état d'ancrage dans lequel les dents délimitent un diamètre externe supérieur au diamètre du tronçon d'entrée 102 de l'alésage 101 et un état de libre passage dans lequel les dents délimitent un diamètre externe inférieur au diamètre du tronçon d'entrée 102.

En aval de la rondelle 15 par référence à un sens d'enfoncement du dispositif de raccordement dans l'alésage 101, l'insert 1 comprend une saillie externe de forme annulaire formant une butée 16 destinée à venir en contact de l'épaulement 104.

Un élément d'étanchéité 17 est reçu dans le tronçon intermédiaire 103 au voisinage de l'épaulement 106. L'élément d'étanchéité 17 est de forme annulaire et présente un diamètre interne légèrement inférieur au diamètre externe de l'extrémité de conduite et un diamètre externe légèrement supérieur au diamètre du tronçon intermédiaire 103.

La mise en place du dispositif de raccordement dans l'alésage 101 va maintenant être décrite en référence à la figure 1.

Le dispositif de raccordement est introduit dans l'alésage 101 par l'extrémité 3 de l'insert 1, l'opérateur exerçant l'effort d'insertion sur le poussoir 9. L'effort d'insertion est poursuivi jusqu'à ce que la butée 16 arrive au contact de l'épaulement 104. L'insert 1 est alors en position d'ancrage (figure 1).

La rondelle d'ancrage 15 permet par sa forme l'insertion de l'insert mais s'oppose à tout retrait, les dents s'arc-boutant et pénétrant dans la surface de l'alésage 101.

La connexion et la déconnexion d'une extrémité de conduite sont réalisées de manière classique, la rondelle d'ancrage 15 étant dans son état d'ancrage lorsque le poussoir 9 est dans sa première position d'enfoncement ou dans sa deuxième position d'enfoncement.

Le retrait du dispositif de raccordement hors de l'alésage 101 va maintenant être décrit en référence aux figures 2 et 3.

Préalablement au retrait proprement dit, le poussoir 9 est soumis à un effort d'enfoncement important par exemple en lui appliquant un coup de maillet (voir figure 2).

Sous cet effort d'enfoncement, le rebord de l'extrémité 10 du poussoir 9 arrive en butée de l'extrémité 2 de l'insert 1 et enfonce celui-ci dans d'alésage 101. La butée 16 est de faible hauteur. Elle peut être prévue continue ou par segments par exemple sécables de manière qu'une poursuite de l'enfoncement de l'insert 1 soit rendue possible. Cette butée peut également être plastiquement déformable de manière à passer déformée, sans trop de frottement, dans le tronçon intermédiaire 103. Le mouvement se poursuivant, la rondelle d'ancrage 15 arrive en butée contre l'épaulement 104 qui déforme la rondelle d'ancrage 15 dans son état de libre passage. L'insert 1 est alors en position de libération (figure 2). On notera que l'espace séparant l'extrémité 3 et l'élément d'étanchéité 17 lorsque l'insert 1 est dans sa position d'ancrage doit être suffisant pour permettre l'enfoncement de l'insert dans sa position de libération.

Le dispositif de raccordement peut alors être extrait de l'alésage en tirant sur le poussoir 9 qui entraîne l'insert 1, la rondelle d'ancrage 15 conservant son état de libre passage du fait de sa plasticité (figure 3). Les moyens de maintien de la rondelle d'ancrage dans son état de libre passage sont donc ici constitués par la géométrie de la rondelle d'ancrage et la structure interne du matériau de la rondelle d'ancrage qui confèrent à cette dernière son aptitude à se déformer plastiquement.

Les éléments identiques ou analogues à ceux précédemment décrits portent une référence numérique identique dans la description qui suit des variantes et du deuxième mode de réalisation.

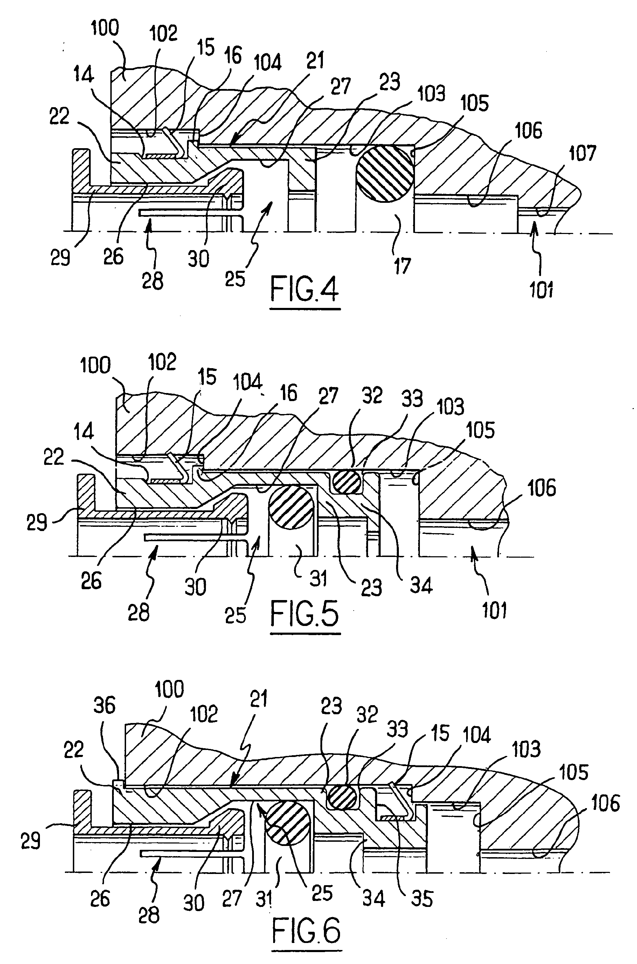

Dans une première variante de réalisation représentée à la figure 4, le dispositif de raccordement comprend un insert 21 ayant une forme extérieure identique à celle de l'insert 1 décrit ci-dessus, c'est-à-dire avec une extrémité 22 et une extrémité 23 et une gorge 14 ménagée extérieurement pour recevoir une rondelle d'ancrage 15 en aval de laquelle par référence à un sens d'enfoncement s'étend une butée 16.

Entre les extrémités 22 et 23 s'étend un alésage 25 ayant un tronçon d'entrée 26 de forme cylindrique et un tronçon de sortie 27 se raccordant au tronçon d'entrée 26 par une portion tronconique s'évasant à l'opposé du tronçon d'entrée 26.

Dans cette première variante, le poussoir 9 et la rondelle d'accrochage 8 sont remplacés par une pince désignée de manière générale en 28 et connue en elle-même.

La pince 28 comprend une extrémité 29 s'étendant en saillie de l'extrémité 22 de l'insert 21, une portion centrale s'étendant dans le tronçon d'entrée 26 de l'alésage 25 et une extrémité 30 s'étendant dans le tronçon de sortie 27 de l'alésage 25. L'extrémité 30 a une forme tronconique destinée à coopérer avec la portion tronconique du tronçon de sortie 27 de telle manière qu'un effort d'extraction exercé sur la pince 28 provoque un rétrécissement élastique de la section de passage définie par l'extrémité 30. Un tel effort d'extraction résulte par exemple d'un recul de l'extrémité de conduite et provoque un serrage de l'extrémité de conduite par la pince 28.

Un joint torique 17 est comme dans le premier mode de réalisation disposé dans le tronçon intermédiaire 103 au voisinage de l'épaulement 106. Comme dans le premier mode de réalisation, la distance séparant l'extrémité 23 de l'insert 21 et l'élément d'étanchéité 17 doit être suffisante pour permettre l'enfoncement de l'insert 21 jusqu'à une position de libération dans le tronçon intermédiaire 103.

La mise en place, le fonctionnement et le retrait du dispositif de raccordement sont identiques à ceux du dispositif de raccordement du premier mode de réalisation.

Dans une deuxième variante représentée à la figure 5 et basée sur la première variante, l'élément d'étanchéité 17 est remplacé par un premier élément d'étanchéité 31 logé dans le tronçon de sortie 27 de l'alésage 25 de l'insert 21, et par un deuxième élément d'étanchéité 32 reçu dans une rainure extérieure 33 d'une portion terminale 34 prolongeant l'extrémité 23 de l'insert 21.

L'élément d'étanchéité 31 est agencé pour assurer l'étanchéité de la liaison entre l'extrémité de conduite et l'insert 21 tandis que l'élément d'étanchéité 32 est destiné à assurer l'étanchéité de la liaison entre l'insert 21 et le corps 100.

La mise en place, le fonctionnement et le retrait du dispositif de raccordement sont identiques à ceux du dispositif de raccordement du premier mode de réalisation.

Dans une troisième variante représentée à la figure 6 et basée sur la deuxième variante, la rondelle d'ancrage 15 est reçu dans une rainure 35 de la portion terminale 34 en aval de l'élément d'étanchéité 32 par référence à un sens d'enfoncement dans l'alésage 101, le tronçon d'entrée 102 de l'alésage 101 étant allongé par rapport à celui du premier mode de réalisation et des deux variantes précédentes.

La butée 16 est remplacée par une butée 36 qui prend appui sur une surface externe du corps 100 entourant le débouché du tronçon d'entrée 102 à l'extérieur du corps 100.

La mise en place, le fonctionnement et le retrait du dispositif de raccordement sont identiques à ceux du dispositif de raccordement du premier mode de réalisation.

On notera dans les deuxième et troisième variantes que la distance séparant l'extrémité 23 de l'insert 21 en position d'ancrage (représentée aux figures 5 et 6) et l'épaulement 105 doit être suffisante pour permettre l'enfoncement de l'insert 21 en position de libération.

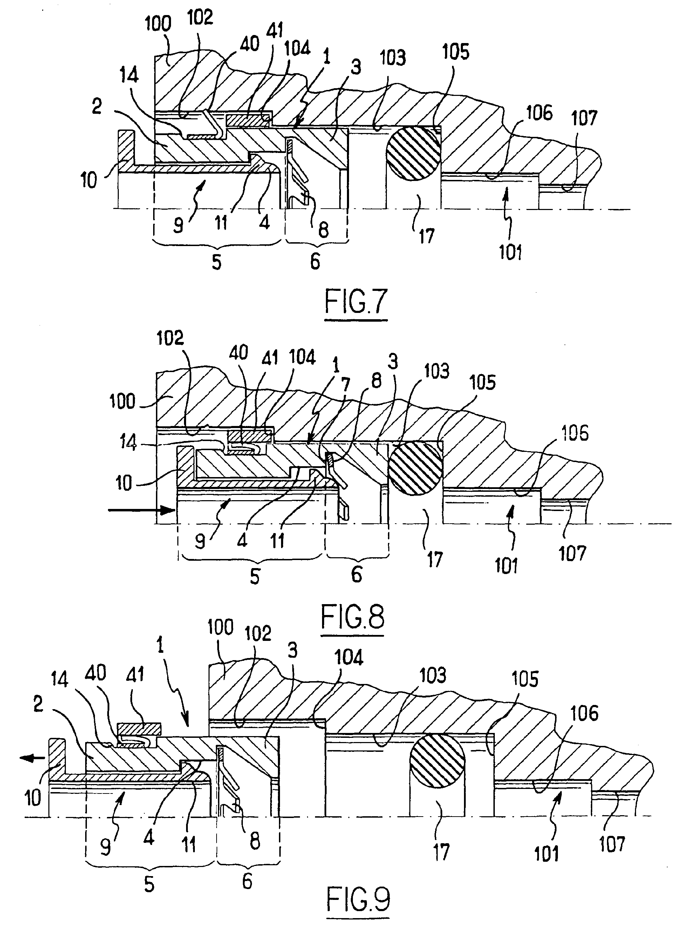

En référence aux figures 7 à 9, le dispositif de raccordement de l'élément de circuit conforme au deuxième mode de réalisation de l'invention ne diffère de l'élément de circuit du premier mode de réalisation que par la nature de la rondelle d'ancrage utilisée et par l'absence d'une butée 16 à l'extérieur de l'insert. Les références numériques utilisées pour l'élément de circuit du deuxième mode de réalisation seront donc identiques à celles utilisées pour le dispositif de raccordement du premier mode de réalisation sauf en ce qui concerne la rondelle d'ancrage qui portera la référence 40 et pour une bague qui portera la référence 41 qui seront détaillées ci-après.

La rondelle 40 se distingue de la rondelle d'ancrage 15 en ce qu'elle est déformable élastiquement et non plus plastiquement entre son état d'ancrage et son état de libre passage.

En aval de la rondelle d'ancrage 40, une bague 4' est montée à coulissement sur l'insert 1 entre une position de repos dans laquelle la bague 41 s'étend sur la portion externe de l'insert 1 adjacente à la gorge 14 et une position active dans laquelle la bague 41 s'étend au-dessus de la gorge 14.

La mise en place du dispositif de raccordement selon le deuxième mode de réalisation s'effectue comme celui du premier mode de réalisation, l'effort d'insertion étant interrompu lorsque la bague 41 dans sa première position arrive en butée de l'épaulement 104 (figure 7). A ce propos on notera que la bague 41 peut être légèrement collée sur l'insert 1 créant une liaison qui peut "lâcher" sous un effort déterminé. Cette bague peut également être épaulée sur l'insert par une butée telle que celle 16 des figures précédentes située au droit du flanc avant de la gorge 14. On peut d'ailleurs mettre en place une sorte de circlips à rupture pour former un épaulement "effaçable".

Le retrait du dispositif de raccordement est réalisé en enfonçant le poussoir 9 de manière à provoquer un déplacement de l'insert 1 dans l'alésage 101 selon un sens d'enfoncement de celui-ci jusqu'à ce que la bague 41, qui est fixe par rapport à l'alésage 101, arrive dans sa deuxième position en déformant la rondelle d'ancrage 15 dans son état de libre passage (figure 8).

Il est alors possible d'opérer le retrait du dispositif de raccordement hors de l'alésage 101 (figure 9).

En ramenant la bague 41 dans sa position, la rondelle d'ancrage revient dans son état d'ancrage, ce qui permet de réutiliser le dispositif de raccordement.

Bien entendu, l'invention n'est pas limitée aux modes de réalisation décrits et on peut y apporter des variantes de réalisation sans sortir du cadre de l'invention tel que défini par les revendications.

## Revendications

1. Elément de circuit de transport de fluide, comportant un corps (100) ayant un alésage (101) dont une extrémité est équipée d'un dispositif de raccordement à une extrémité de conduite, le dispositif de raccordement comportant une partie (1 ; 21) équipée d'une rondelle d'ancrage (15 ; 40) du dispositif dans l'alésage, la rondelle étant déformable entre un état d'ancrage et un état de libre passage, **caractérisé en ce que** la rondelle est fixée sur cette partie qui est agencée pour être manoeuvrable de l'extérieur du corps dans un sens d'enfoncement dans l'alésage depuis une position d'ancrage dans laquelle la rondelle est dans son état d'ancrage et une position de libération dans laquelle la rondelle coopère avec une butée (104 ; 41), fixe par rapport à l'alésage dans le sens d'enfoncement, amenant la rondelle dans son état de libre passage dans lequel elle est maintenue par des moyens de maintien (41) et/ou la rondelle d'ancrage (15) est plastiquement déformable entre ses deux états.

2. Elément selon la revendication 1, **caractérisé en ce que** la rondelle d'ancrage (40) est élastiquement déformable entre ses deux états, les moyens de maintien comprenant une bague (41) montée sur la partie support de la rondelle d'ancrage (1) en aval de la rondelle d'ancrage par référence au sens d'enfoncement pour coulisser sur la partie support et pour prendre appui contre un épaulement (104) de l'alésage (101) de telle manière que la bague vienne coiffer la rondelle d'ancrage lorsque la partie support est dans la position de libération.

3. Elément selon la revendication 1, **caractérisé en ce que** le dispositif de raccordement comprend un insert (1, 21) engagé dans l'alésage, la rondelle d'ancrage (15 ; 40) étant solidaire de l'insert.

4. Elément selon la revendication 3, **caractérisé en ce que** l'insert (1) reçoit un poussoir (9) tubulaire de déconnexion qui s'étend en saillie du corps (100) au moins lorsque l'insert est en position d'ancrage et **en ce que** l'insert comprend une butée (2) à l'enfoncement du poussoir, la butée étant agencée de telle manière que le poussoir constitue un moyen d'enfoncement de l'insert dans l'alésage.

5. Elément selon la revendication 1, **caractérisé en ce que** la butée fixe est un épaulement (104) de l'alésage (101).

## Claims

1. A fluid transport circuit element comprising a body (100) having a bore (101) with one end fitted with a pipe end coupling device, the coupling device having a portion (1; 21) fitted with an anchor washer (15; 40) for anchoring the device in the bore, the washer being deformable between an anchor state and a free passage state, the circuit element being **characterized in that** said portion which is arranged to be drivable from outside the body in the insertion direction into the bore from an anchor position in which the washer is in its anchor state and a release position in which the washer co-operates with an abutment (104; 41) that is stationary relative to the bore in the insertion direction, thereby bringing the washer into its free passage state in which it is retained by retention means (41) and/or the washer is plastically deformable between its two states.

2. An element according to claim 1, **characterized in that** the anchor washer (40) is elastically deformable between its two states, the retention means comprising a ring (41) mounted on the anchor washer support portion (1) downstream from the anchor washer relative to the insertion direction so as to slide onto the support portion and so as to bear against a shoulder (104) of the bore (101) in such a manner that the ring comes to overlie the anchor washer when the support portion is in the release position.

3. An element according to claim 1, **characterized in that** the coupling device comprises an insert (1, 21) engaged in the bore, the anchor washer (15; 40) being secured to the insert.

4. An element according to claim 4, **characterized in that** the insert (1) receives a tubular disconnection pusher (9) which projects from the body (100) at least when the insert is in the anchor position, and **in that** the insert includes an abutment (2) against insertion of the pusher, the abutment being arranged in such a manner that the pusher constitutes means for pushing the insert into the bore.

5. An element according to claim 1, **characterized in that** the stationary abutment is a shoulder (104) of the bore (101).

## Patentansprüche

1. Fluidtransportleitungselement, umfassend ein Gehäuse (100), das eine Bohrung (101) hat, deren eines Ende mit einer Verbindungsvorrichtung zur Verbindung mit einem Leitungsende versehen ist, wobei die Verbindungsvorrichtung einen Abschnitt (1; 21) umfasst, der mit einer Verankerungsscheibe (15; 40) zur Verankerung der Vorrichtung in der Bohrung versehen ist, wobei die Scheibe zwischen einem Verankerungszustand und einem Zustand mit freiem Durchtritt verformbar ist, **dadurch gekennzeichnet, dass** die Scheibe an diesem Abschnitt befestigt ist, der so ausgebildet ist, dass er von außerhalb des Gehäuses in Eindrückrichtung in die Bohrung ausgehend von einer Verankerungsposition, in der die Scheibe in ihrem Verankerungszustand ist, in eine Freigabeposition bewegbar ist, in der die Scheibe mit einem Anschlag (104; 41) zusammenwirkt, der in Bezug auf die Bohrung in Eindrückrichtung ortsfest ist und die Scheibe in ihren Zustand mit freiem Durchtritt bringt, in welchem sie von Haltemitteln (41) gehalten wird, und/oder die Verankerungsscheibe (15) plastisch zwischen ihren beiden Zuständen verformbar ist.

2. Element nach Anspruch 1, **dadurch gekennzeichnet, dass** die Verankerungsscheibe (40) elastisch zwischen ihren beiden Zuständen verformbar ist, wobei die Haltemittel einen Ring (41) umfassen, der an dem Halteabschnitt zum Halten der Verankerungsscheibe (1) in Bezug auf die Eindrückrichtung stromabwärts der Verankerungsscheibe angebracht ist, um sich an dem Halteabschnitt zu verschieben und an einer Schulter (104) der Bohrung (101) derart zur Anlage zu kommen, dass der Ring die Verankerungsscheibe abdecken wird, wenn der Halteabschnitt in der Freigabeposition ist.

3. Element nach Anspruch 1, **dadurch gekennzeichnet, dass** die Verbindungsvorrichtung einen Einsatz (1, 21) umfasst, der mit der Bohrung in Eingriff steht, wobei die Verankerungsscheibe (15; 40) fest mit dem Einsatz verbunden ist.

4. Element nach Anspruch 3, **dadurch gekennzeichnet, dass** der Einsatz (1) einen rohrförmigen Stößel (9) zum Lösen der Verbindung aufnimmt, der aus dem Gehäuse (100) zumindest dann vorsteht, wenn der Einsatz in der Verankerungsposition ist, und dass der Einsatz einen Anschlag (2) entgegen dem Eindrücken des Stößels umfasst, wobei der Anschlag derart ausgebildet ist, dass der Stößel Eindrückmittel zum Hineindrüclcen des Einsatzes in die Bohrung bildet.

5. Element nach Anspruch 1, **dadurch gekennzeichnet, dass** der ortsfeste Anschlag eine Schulter (104) der Bohrung (101) ist.
